# EUROPEAN PATENT SPECIFICATION

(11) **EP 3 875 532 B1**
(45) Date of publication and mention of the grant of the patent: **17.01.2024**
(21) Application number: 19879398.6
(22) Date of filing: 28.10.2019
(51) Int. Cl.: C08L 77/02, C08J 3/12, C08K 3/08, C08K 3/26, C08K 3/34, C08K 3/36, C08J 3/20

(54) **METALLIC-TONE THERMOPLASTIC RESIN PELLET**
THERMOPLASTISCHES HARZGRANULAT MIT METALLISCHEM FARBTON
GRANULE DE RÉSINE THERMOPLASTIQUE À TON MÉTALLIQUE

(30) Priority: 31.10.2018 JP 2018205148
(43) Date of publication of application: 08.09.2021
(73) Proprietor: Unitika Ltd., Amagasaki-shi, Hyogo 660-0824 (JP)
(72) Inventor: NEGI, Yukinari, Uji-shi, Kyoto 611-0021 (JP); KISARA, Yoshihito, Uji-shi, Kyoto 611-0021 (JP); TANAKA, Masako, Uji-shi, Kyoto 611-0021 (JP)
(74) Representative: Vossius & Partner Patentanwälte Rechtsanwälte mbB
(86) International application number: PCT/JP2019/042178
(87) International publication number: WO 2020/090741

(56) References cited:
- WO-A1-99/13006
- WO-A1-2012/165258
- WO-A1-2015/053025
- WO-A1-2016/121894
- WO-A1-2017/111055
- WO-A1-2018/159433
- CA-A1- 2 243 288
- JP-A- 2002 365 595
- JP-A- 2007 137 963
- DATABASE WPI Week 200348 18 December 2002 (2002-12-18) Thomson Scientific, London, GB; AN 2003-508317 XP002804805, -& JP 2002 365595 A (HASEGAWA MEGANE KK) 18 December 2002 (2002-12-18)
- DATABASE WPI Week 199323 7 May 1993 (1993-05-07) Thomson Scientific, London, GB; AN 1993-185281 XP002804806, -& JP H05 112668 A (NIPPON COLOURING KK) 7 May 1993 (1993-05-07)
- DATABASE WPI Week 200014 18 January 2000 (2000-01-18) Thomson Scientific, London, GB; AN 2000-156829 XP002804807, -& JP 2000 017169 A (SUIRYO PLASTIC KK) 18 January 2000 (2000-01-18)

## Description

### TECHNICAL FIELD

The present invention relates to a pellet made of a metallic-tone thermoplastic resin composition, and more particularly to a thermoplastic resin pellet for producing a metallic-tone molded body.

### BACKGROUND ART

Molded bodies molded from thermoplastic resins are generally used for interior and exterior covers of automobile instrument panels, lamp parts, engine covers, home appliances, and the like. The appearance of such resin molded bodies may be required to have a metallic color tone such as that of steel or an aluminum alloy. Particularly in recent years, there has been an increasing demand for the aesthetic appearance of the resin molded body, and the appearance of the resin molded body is required not only to have a metallic color tone but also to have a glossy feeling and suppress a high brilliance feeling. In addition, various types of metallic colors are required, from silver-gray to slightly whitish gray-white.

In order to satisfy such a requirement, a method of coating a paint containing a metal powder such as aluminum on the surface of a resin molded body, so-called metallic coating, has been conventionally performed. However, since this metallic coating uses an organic solvent, there is a problem in terms of working environment, and also that productivity is inferior, which results in higher cost.

As a method for solving the above problem, it has been proposed to use a resin composition obtained by filling a thermoplastic resin such as polyamide with a metal powder such as aluminum or glossy particles in which surfaces of mica, wollastonite, glass or the like are coated with a metal.

For example, Patent Literature 1 discloses a polyamide resin composition in which particles capable of expressing a metallic color are formulated into a polyamide having a layered silicate uniformly dispersed therein on a molecular level. Further, for example, Patent Literature 2 discloses a polyamide resin composition containing a polyamide resin and metal flakes. Further, for example, Patent Literature 3 discloses a resin composition using an aliphatic polyamide resin and an amorphous polyamide resin as the polyamide resin. Further, for example, Patent Literature 4 discloses a polyamide resin composition containing metallic particles having different particle sizes.
Patent Literature 5 discloses thermoplastic resin particles which are used in molding materials.

### CITATIONS LIST

### PATENT LITERATURE

Patent Literature 1: WO 99/13006 A
Patent Literature 2: JP 2001-509524 A
Patent Literature 3: JP 2014-167049 A
Patent Literature 4: JP 6246419 B2
Patent Literature 5: JP 2000-017169 A

### SUMMARY OF INVENTION

### PROBLEMS TO BE SOLVED BY THE INVENTION

However, the molded body obtained from the thermoplastic resin composition described in the prior art document has insufficient metallic coloring property, insufficient surface smoothness property, and/or insufficient flow mark suppressing properties. As a result, its metallic appearance has been insufficient as compared with painting, plating, and the like. In particular, when producing a molded body by injection molding, higher injection speed has remarkably caused the generation of a flow mark.

An object of the present invention is to provide a thermoplastic resin pellet capable of obtaining a molded body which is excellent in metallic coloring property, surface smoothness property, and flow mark suppressing properties, and has a sufficient metallic appearance.

An object of the present invention is to provide a thermoplastic resin pellet capable of obtaining a molded body which is excellent in metallic coloring property, surface smoothness property, and flow mark suppressing properties, has a sufficient metallic appearance, and is also excellent in heat resistance property and mechanical properties.

### MEANS FOR SOLVING PROBLEMS

The present inventors have assiduously made studies so as to solve the problems, and as a result, the present invention has been accomplished thereby.

That is, the gists of the present invention are as follows.

A metallic-tone thermoplastic resin pellet comprises 100 parts by weight of a thermoplastic resin (A), 0.5 to 10 parts by mass of metallic particles (B), and 0 to 10 parts by mass of plate-like, fibrous and/or granular filler (C),
wherein
the thermoplastic resin (A) is polyamide, the metallic particles (B) are aluminum particles, the pellet has a cylindrical shape having a circular or elliptical cross section perpendicular to the longitudinal direction, the pellet has a length of 0.5 to 2.8 mm and a cross-sectional major diameter of 0.5 to 2.8 mm, and a product of the length (mm) and the cross-sectional major diameter (mm) of the pellet is from 0.5 to 5.5.

A content of the metallic particles (B) can be from 1 to 5 parts by mass.

The filler (C) can be at least one inorganic filler selected from the group consisting of swelling layered silicate, talc, kaolin, wollastonite, calcium carbonate, silica, and mica.

The filler (C) can have an average particle size of 0.01 to 10 µm.

A content of the filler (C) can be from 2 to 10 parts by mass.

In the metallic-tone thermoplastic resin pellet, the thermoplastic resin (A) is polyamide,
the product of the length (mm) and the cross-sectional major diameter (mm) of the pellet can be form 0.5 to 2, and
a content of the filler (C) can be from 2 to 10 parts by mass.

A molded body is obtained by injection molding or extrusion molding using the metallic-tone thermoplastic resin pellet as mentioned above.

### EFFECTS OF THE INVENTION

When the metallic-tone thermoplastic resin pellet of the present invention is used, a molded body having excellent metallic coloring property, surface smoothness property, and flow mark suppressing properties and having a sufficient metallic appearance can be obtained. Specifically, according to the present invention, it is possible to obtain a molded body having good and uniform metallic coloring, no color unevenness, and good gloss.

### BRIEF DESCRIPTION OF DRAWING

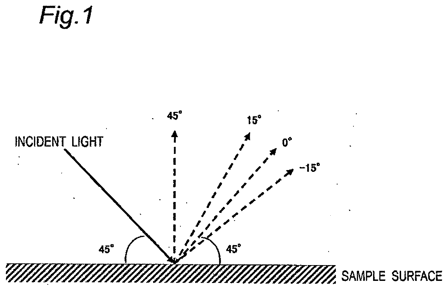

FIG. 1 is a schematic explanatory view for measuring L* on the surface of a test piece in an example.

### MODES FOR CARRYING OUT THE INVENTION

### [Components of Metallic-tone Thermoplastic Resin Pellet]

The metallic-tone thermoplastic resin pellet of the present invention (hereinafter, simply referred to as "pellet" in some cases) contains a thermoplastic resin (A) and metallic particles (B), and preferably further contains a filler (C) from the viewpoint of further improving metallic coloring property, surface smoothness property, flow mark suppressing property, metallic appearance, heat resistance property, and mechanical properties.

The thermoplastic resin (A) is a polymer capable of injection molding or extrusion molding and is polyamide. Examples of the thermoplastic resin (A) which do not form part of the present invention include, for example, polyolefin (e.g., polyethylene, polypropylene), ABS resin (acrylonitrile-butadiene-styrene resin), polystyrene, polymethyl methacrylate, polyacetal, polyethylene terephthalate, polybutylene terephthalate, polycarbonate, polyphenylene ether, and polyarylate. From the viewpoint of further improving metallic coloring property, surface smoothness property, flow mark suppressing property, heat resistance property, and mechanical properties, and improving economic efficiency, the thermoplastic resin (A) is preferably a polyolefin (particularly, a polypropylene), an ABS resin, a polyamide, or a polycarbonate, more preferably a polyamide, a polyolefin (particularly, a polypropylene) or a polycarbonate, and even more preferably a polyamide.

In the present specification, the metallic coloring property is a property in which a metallic color is expressed on the surface of a molded body. Specifically, the higher the flip-flop value, the better the metallic coloring property.

The surface smoothness property is a property related to the gloss of the surface of the molded body. Specifically, the higher the surface glossiness, the better the surface smoothness.

The flow mark suppressing property is a property in which the generation of a flow mark that causes color unevenness of the metallic color on the surface of the molded body is suppressed. The flow mark is a streak-like flow mark generated due to the flow of the melt while solidifying in the mold during molding, and is often generated in the vicinity of the gate during injection molding, for example.

The metallic appearance is a property in which the visual appearance of the obtained molded body is similar to the appearance of a genuine metal. Specifically, the metallic appearance is one of the overall properties related to coloring, gloss and color unevenness. The metallic appearance is a property that can be obtained for the first time by virtue of its excellent metallic coloring property, surface smoothness property, and flow mark suppressing property.

The heat resistance property is a property that allows a molded body to withstand deformation due to heat.

The mechanical properties are properties related to the mechanical strength (e.g., bending strength) of a molded body.

The polyamide is not particularly limited, and examples thereof include aliphatic polyamides and aromatic polyamides, which can be mixed and used. As the polyamide, an aliphatic polyamide is preferable from the viewpoint of further improving the metallic coloring property, surface smoothness property, flow mark suppressing property, and metallic appearance.

Examples of the aliphatic polyamide include, for example, polycaproamide (polyamide 6), polytetramethylene adipamide (polyamide 46), polyhexamethylene adipamide (polyamide 66), polycaproamide/polyhexamethylene adipamide copolymer (polyamide 6/66), polyundecamide (polyamide 11), polycaproamide/polyundecamide copolymer (polyamide 6/11), polydecamide (polyamide 12), polycaproamide/polydodecamide copolymer (polyamide 6/12), polyhexamethylene sebacamide (polyamide 610), polyhexamethylene dodecamide (polyamide 612), and the like. Polyamide is preferably polyamide 6, polyamide 66, polyamide 11, polyamide 12, polyamide 6/11, polyamide 6/12 or a mixture thereof from the viewpoint of further improving the metallic coloring property, surface smoothness property, flow mark suppressing property, and metallic appearance.

Examples of the aromatic polyamide include crystalline polyamides such as polyhexamethylene terephthalamide (nylon 6T), polyhexamethylene terephthal/isophthalamide (nylon 6T/6I), polybis(4-aminocyclohexyl)methane dodecamide (nylon PACM12), polybis(3-methyl-4-aminocyclohexyl)methane dodecamide (nylon dimethyl PACM12), polymethaxylyleneadipamide (nylon MXD6), polynonamethyleneterephthalamide (nylon 9T), polydecamethyleneterephthalamide (nylon 10T), polyundecamethyleneterephthalamide (nylon 11T), and polyundecamethylenehexahydroterephthalamide (nylon 11T(H)); and amorphous polyamides such as a polycondensation product of isophthalic acid/terephthalic acid/1,6-hexanediamine/bis(3-methyl-4-aminocyclohexyl)methane, a polycondensation product of terephthalic acid/2,2,4-trimethyl-1,6-hexanediamine/2,4,4-trimethyl-1,6-hexanediamine, a polycondensation product of isophthalic acid/bis(3-methyl-4-aminocyclohexyl)methane/ω-laurolactum, a polycondensation product of isophthalic acid/terephthalic acid/1,6-hexanediamine, a polycondensation product of isophthalic acid/2,2,4-trimethyl-1,6-hexanediamine/2,4,4-trimethyl-1,6-hexanediamine, a polycondensation product of isophthalic acid/terephthalic acid/2,2,4-trimethyl-1,6-hexanediamine/2,4,4 -trimethyl-1,6-hexanediamine, a polycondensation product of isophthalic acid/bis(3-methyl-4-aminocyclohexyl)methane/ω-laurolactum, and a polycondensation product of isophthalic acid/terephthalic acid/other diamine components. The aromatic polyamide is preferably an amorphous polyamide because of its high effects of improving light resistance of the obtained molded body and improving surface appearance, and a polycondensation product of isophthalic acid/terephthalic acid/1,6-hexanediamine, a polycondensation product of isophthalic acid/terephthalic acid/1,6-hexanediamine/bis(3-methyl-4-aminocyclohexyl)methane or a mixture thereof can be more preferably used.

In the present invention, an aliphatic polyamide is preferably used from the viewpoint of further improving the metallic coloring property, surface smoothness property, flow mark suppressing property, and metallic appearance, but an aromatic polyamide can also be mixed and used. When mixed and used, it is preferable that the aliphatic polyamide/aromatic polyamide = 50/50 to 100/0 (mass ratio).

The relative viscosity, which is an index of the molecular weight of polyamide, is not particularly limited, but the relative viscosity measured under the conditions of 96% by mass of concentrated sulfuric acid as a solvent, a temperature of 25°C, and a concentration of 1 g/dl is preferably from 1.5 to 3.5, more preferably from 1.7 to 3.1, and even more preferably from 1.9 to 2.8, from the viewpoint of further improving the metallic coloring property, surface smoothness property, flow mark suppressing property, metallic appearance, heat resistance property, and mechanical properties.

The MFR, which is an index of the molecular weight of polyolefin (e.g., polypropylene), is not particularly limited, but the MFR measured at a temperature of 230°C and a load of 2.16 kgf according to the method specified in JIS K7210 is preferably from 1 to 60 g/10 minutes, more preferably from 5 to 50 g/10 minutes, and even more preferably from 10 to 50 g/10 minutes, from the viewpoint of further improving the metallic coloring property, surface smoothness property, and flow mark suppressing property, and metallic appearance.

The ultimate viscosity, which is an index of the molecular weight of a polycarbonate resin, is not particularly limited, but the ultimate viscosity (dl/g) at 20°C in a methylene chloride solvent is preferably from 0.4 to 1.5, more preferably from 0.45 to 1.0, and even more preferably from 0.45 to 0.8.

The metallic particles (B) are additives that can express a metallic color in the molded body and are aluminum particles. Examples of metallic particles (B) which do not form part of the present invention include particles (particularly, powders) of one or more inorganic materials selected from the group consisting of iron, nickel, chromium, tin, zinc, indium, titanium and copper as metals; alloys of two or more of the metals; and oxides, nitrides, sulfides and carbides of the metals and the alloys. Among them, aluminum is preferable from the viewpoint of further improving the metallic coloring property, surface smoothness property, flow mark suppressing property, and metallic appearance.

The metallic particles (B) (particularly, aluminum particles) have a plate shape or a granular shape, and preferably have a plate shape from the viewpoint of further improving the metallic coloring property, surface smoothness property, flow mark suppressing property, and metallic appearance. In the metallic particles (B), the plate shape is a flake shape or a flat plate shape. In the metallic particles (B), the granular shape may have a grain-like shape as a whole, and may be, for example, a substantially spherical shape, a substantially ellipsoidally spherical shape, a substantially cubic shape, a substantially rectangular parallelepiped shape, or a composite shape thereof.

From the viewpoint of further improving the metallic coloring property, surface smoothness property, flow mark suppressing property, and metallic appearance, the metallic particles (B) are preferably powders having an average particle size of 1 to 100 µm, particularly 5 to 100 µm, and even more preferably powders having an average particle size of 10 to 80 µm. The average particle size of the metallic particles (B) is the average value of the maximum diameter (or maximum length) when they are granular, and is the average value of the maximum length on the maximum surface when they are plate-shaped. When two or more types of metallic particles having different average particle sizes are used as described later, the average particle size of each of the metallic particles (B) is preferably within the above range.

The average particle size of the metallic particles (B) can be measured by a laser diffraction/scattering type particle size distribution measuring device, for example, Microtrac 2 (made by Nikkiso Co., Ltd.).

As the metallic particles (B), two or more types (particularly, two types) of metallic particles (B) having different average particle sizes are preferably used from the viewpoint of further improving the metallic coloring property, surface smoothness property, flow mark suppressing property, and metallic appearance. For example, metallic particles (B) having an average particle size of 1 to 20 µm (particularly, plate-shaped aluminum powders) and metallic particles (B) having an average particle size of 40 to 60 µm (particularly plate-shaped aluminum powders) can preferably be used in combination.

The content of the metallic particles (B) needs to be from 0.5 to 10 parts by mass with respect to 100 parts by mass of the thermoplastic resin (A), and from the viewpoint of further improving the metallic coloring property, surface smoothness property, flow mark suppressing property, and metallic appearance, the content thereof is preferably from 0.5 to 9 parts by mass, more preferably from 1 to 5 parts by mass, and even more preferably from 1.5 to 4.5 parts by mass. When two or more types of metallic particles (B) are used, the total content thereof may be within the above range. When the content of the metallic particles (B) is less than this range, the metallic coloring property is lowered, and a good metallic appearance cannot be obtained. When the content exceeds this range, the surface smoothness property and the flow mark suppressing property are deteriorated, and a sufficient metallic appearance cannot be obtained.

The pellet of the present invention contains a plate-shaped, fibrous, and/or granular filler (C) from the viewpoint of further improving the metallic coloring property, surface smoothness property, flow mark suppressing property, metallic appearance, heat resistance property, and mechanical properties. When the pellet of the present invention contains such a filler (C), the metallic appearance of the obtained molded body is further improved. As a result, the visual appearance of the obtained molded body is even more similar to a genuine metallic appearance.

The plate-shaped, fibrous, and/or granular filler (C) means that as the filler (C), a plate-shaped filler, a fibrous filler, or a granular filler may be used, or two or more of these fillers may be used in combination. In the filler (C), the plate shape is a flake shape or a flat plate shape. In the filler (C), the fibrous shape is an elongated shape as a whole, and includes a rod shape. In the filler (C), the granular shape may have a grain-like shape as a whole, and may be, for example, a substantially spherical shape, a substantially ellipsoidally spherical shape, a substantially cubic shape, a substantially rectangular parallelepiped shape, or a composite shape thereof.

The filler (C) preferably has the plate shape from the viewpoint of further improving the metallic coloring property, surface smoothness property, flow mark suppressing property, metallic appearance, heat resistance property, and mechanical properties.

Examples of the filler (C) include at least one inorganic filler selected from the group consisting of swelling layered silicate, talc, kaolin, wollastonite, calcium carbonate, silica, and mica. From the viewpoint of further improving the metallic coloring property, surface smoothness property, flow mark suppressing property, and metallic appearance, among the above fillers (C), one or more fillers selected from the group consisting of swelling layered silicate, kaolin, and wollastonite is preferable, and swelling layered silicate is more preferable. The most preferable embodiment from the viewpoint of the metallic coloring property is a case where, among the above fillers (C), swelling layered silicate is used alone. When the thermoplastic resin (A) is an aliphatic polyamide and the swelling layered silicate is contained as the filler (C), each of the three-dimensional portions of the obtained molded body has the effect of being observed in a state where the metallic appearance is more remarkably provided. That is, it is possible to obtain a molded body having a more metallic three-dimensional effect. The metallic three-dimensional effect is a state where the flip-flop value is high.

The swelling layered silicate has a structure in which a plurality of layers are overlapped, and has a plate shape as a whole.

Talc, kaolin, calcium carbonate, silica, and mica are granular.

Wollastonite is fibrous.

The swelling layered silicate may be naturally occurring or artificially synthesized or modified, and examples thereof include a smectite group (montmorillonite, beidellite, hectorite, sauconite, etc.), a vermiculite group (vermiculite, etc.), a mica group (fluoromica, muscovite, paragonite, phlogopite, lepidrite, etc.), a brittle mica group (margarite, clintonite, anandite, etc.), and a chlorite group (donbassite, sudoite, cookeite, clinochlore, chamosite, nimite, etc.). In the present invention, swelling fluoromica and montmorillonite are particularly preferably used. Two or more kinds of swelling layered silicates may be used in combination.

The swelling fluoromica preferably used in the present invention generally has a structural formula represented by the following formula.

Mₐ(MgxLi_{b})Si₄O_{Y}F_{Z}

(In the formula, M represents an ion-exchangeable cation, and specific examples thereof include sodium and lithium. Furthermore, a, b, X, Y, and Z each represent a coefficient, wherein 0 ≤ a ≤ 0.5, 0 ≤ b ≤ 0.5, 2.5 ≤ X ≤ 3, 10 ≤ Y ≤ 11, and 1.0 ≤ Z ≤ 2.0.)

A method of producing such swelling fluoromica includes, for example, a melting method in which silicon oxide, magnesium oxide, and various fluorides are mixed together, the resulting mixture is completely melted in an electric or gas furnace in a temperature range of 1400 to 1500°C, and crystals of the swelling fluoromica are then grown in the reaction vessel during the cooling process.

There is also a method of obtaining swelling fluoromica, in which talc [Mg₃Si₄O₁₀(OH)₂] is used as a starting material, and alkali metal ions are intercalated thereinto to impart swelling property (JP H02-149415 A). In this method, swelling fluoromica can be obtained by mixing the talc and an alkali silicofluoride at a predetermined formulating ratio, and then subjecting the mixture to heat treatment in a magnetic crucible at a temperature of 700 to 1200°C for a short time. At this time, the amount of the alkali silicofluoride mixed with the talc is preferably in the range of 10 to 35% by mass of the whole mixture.

Montmorillonite is represented by the following formula, and can be obtained by purifying naturally produced montmorillonite by elutriation treatment or the like.

MₐSi(Al₂-aMg)O₁₀(OH)₂·nH₂O

(In the formula, M represents a cation such as sodium, and 0.25 ≤ a < 0.6. Furthermore, the number of water molecules bonded to interlayer ion-exchangeable cations can vary depending on cation species and conditions such as humidity, so this variability is expressed by nH₂O in the formula.)

Ion substitution products of montmorillonite having the same type, such as magnesian montmorillonite, iron montmorillonite, iron magnesian montmorillonite, are known and these may also be used.

The filler (C) may be subjected to surface treatment with one or two or more known surface treatment agents (coupling agents) selected from the group consisting of organic compounds having an amide group, an amino group, a carboxyl group, a mercapto group, a glycidyl group, and/or an acid anhydride group, and derivatives thereof. Among the above, the filler (C) is preferably subjected to surface treatment with an organic compound having an amino group, an acid anhydride group, or a glycidyl group. The amount of the surface treatment agent used is preferably from 0.1 to 2 parts by mass with respect to 100 parts by mass of the inorganic filler.

The average particle size of the filler (C) is from 0.01 to 10 µm, preferably from 0.05 to 10 µm, and more preferably from 0.1 to 7 µm. The average particle size of the filler (C) is the average value of the maximum diameter (or maximum length) when it is granular, the average value of the fiber diameter when it is fibrous, and the average value of the maximum length on the maximum surface when it is plate-shaped. The average particle size is a number average value for at least 100 or more particles observed by an electron microscope.

When the filler (C) has a fibrous shape, its average fiber length is preferably from 0.1 to 100 µm, more preferably from 0.5 to 50 µm, and even more preferably from 1 to 25 µm, from the viewpoint of further improving the metallic coloring property, surface smoothness property, flow mark suppressing property, and metallic appearance.

The average thickness and average fiber length of the filler (C) can be calculated by a simple average of any 50 measurements with the electron microscope.

The filler (C) can be formulated in an amount of 0 to 10 parts by mass with respect to 100 parts by mass of the thermoplastic resin (A). When the content of the filler (C) exceeds 10 parts by mass, the metallic coloring property, surface smoothness property, and flow mark suppressing property of the obtained molded body deteriorate. The content of the filler (C) is preferably from 2 to 10 parts by mass, more preferably from 2 to 8 parts by mass, and even more preferably from 2 to 6 parts by mass, from the viewpoint of further improving the metallic coloring property, surface smoothness property, flow mark suppressing property, metallic appearance, heat resistance property, and mechanical properties.

By pre-dispersing the filler (C) (particularly, the swelling layered silicate) in the thermoplastic resin (A), the metallic coloring property, surface smoothness property, and metallic appearance are further improved. For example, polymerization reaction of the monomer components constituting the thermoplastic resin (A) (particularly, polyamide) may be performed in the presence of the swelling layered silicate. As a result, the swelling layered silicate can be uniformly dispersed in the thermoplastic resin (A), and the surface glossiness of the obtained molded body can be further enhanced, resulting in further improvement of the metallic appearance. For example, when the thermoplastic resin (A) is polyamide, aminocarboxylic acid or its lactam can be used as the above-mentioned monomer used in the polymerization reaction, so that the lactam may be used as a raw material of the polymerization reaction. The polymerization method include a method in which, after swelling layered silicate and lactam are charged into an autoclave, melt polycondensation reaction is performed using an initiator such as water at a temperature of 240 to 300°C under a pressure of 0.2 to 3 MPa for 1 to 15 hours. When ε-caprolactam is used, the polymerization is preferably performed at a temperature of 250 to 280°C under a pressure of 0.5 to 2 MPa for 1 to 5 hours (particularly, 3 to 5 hours). In order to remove the aminocarboxylic acid (lactam) remaining in the polyamide resin after the polymerization, the polyamide resin pellet is preferably scoured with hot water, and its conditions include treatment in hot water of 90 to 100°C for 8 hours or more.

### [Metallic-tone Thermoplastic Resin Pellet]

The thermoplastic resin pellet in the present invention has a cylindrical shape having a circular or elliptical cross section perpendicular to the longitudinal direction. The longitudinal direction is the height direction of the cylindrical shape. The pellet has a length (L) of 0.5 to 2.8 mm, and from the viewpoint of further improving the metallic coloring property, surface smoothness property, flow mark suppressing property and metallic appearance, preferably from 0.5 to 2.5 mm, more preferably from 0.8 to 2.3 mm, even more preferably from 0.8 to 1.8 mm, and most preferably from 0.8 to 1.2 mm. The pellet has a major diameter (D) of 0.5 to 2.8 mm, and from the viewpoint of further improving the metallic coloring property, surface smoothness property, flow mark suppressing property, and metallic appearance, preferably 0.5 to 2.5 mm, more preferably 0.8 to 2.3 mm, even more preferably 0.8 to 1.8 mm, and most preferably 0.8 to 1.2 mm. When the pellet has a length (L) of less than 0.5 mm, chipping often occurs during cutting with a pelletizer, so that dust may increase and the molding stability may be impaired, which is not preferable. On the other hand, when the pellet has a length (L) exceeding 2.8 mm, color unevenness due to flow marks is likely to occur, and as a result, the metallic appearance is deteriorated. When the pellet has a cross-sectional major diameter (D) of less than 0.5 mm, the discharge rate may not increase in the melt-kneading step, or strands may be easily broken, resulting in poor processing efficiency, which is not preferable. On the other hand, when the pellet has a cross-sectional major diameter (D) exceeding 2.8 mm, color unevenness due to flow marks is likely to occur, and metallic coloring property is deteriorated.

The length (L) of the pellet is the maximum length in the longitudinal direction of each pellet. The major diameter (D) of the pellet is the maximum of long diameter of the cross section perpendicular to the longitudinal direction of each pellet. When the cross section perpendicular to the longitudinal direction of the pellet is circular, there is no distinction between the major diameter and the minor diameter, and the major diameter (D) is a diameter of the circle. For the length (L) and major diameter (D) of the pellet, the average value of randomly selected 20 pellets is used.

Each of the pellets of the present invention needs not necessarily have a cylindrical shape in a strict sense, and slight strain or deformation is acceptable. For example, as for the maximum length L in the longitudinal direction of the pellet, each pellet may have a portion having a length in the longitudinal direction of 0.8 × L to 1 × L. Further, for example, as for the maximum major diameter D of the pellet, each pellet may have a portion having a major diameter of 0.8 × D to 1 × D. Further, for example, as for the maximum minor diameter M of the pellet, each pellet may have a portion having a minor diameter of 0.8 × M to 1 × M.

The product (L × D) of the length (L) (mm) and cross-sectional major diameter (D) (mm) of the pellet is from 0.5 to 5.5, and even more preferably from 0.5 to 2, from the viewpoint of further improving the metallic coloring property, surface smoothness property, flow mark suppressing property, and metallic appearance.

The minor diameter (M) of the pellet may be usually within the same range as the major diameter (D) described above as long as it is shorter than the major diameter (D).

In the cross section perpendicular to the longitudinal direction of the pellet, the ratio of the major diameter to the minor diameter (major diameter/minor diameter) is preferably from 1 to 2, and more preferably from 1 to 1.7, from the viewpoint of measurement stability during molding.

The length (L) of the pellet can be adjusted by the speed of a take-up roller in the pelletizer and the rotation speed of a cutter blade during melt kneading.

The major diameter (D) of the pellet can be adjusted by the hole size of the die, the take-up roller speed of the pelletizer, and cooling timing of the strands. The hole size (diameter) of the die is not particularly limited, and is preferably from 2 to 5 mm, and more preferably from 2.5 to 4 mm. The number of holes in the die is set by the discharge rate, and the discharge rate per hole is preferably from 10 to 40 kg/h, and more preferably from 15 to 35 kg/h. When the hole size of the die exceeds 5 mm or the discharge rate per hole is less than 10 kg, the strands may be easily broken and the processing stability may be poor, which is not preferable. On the other hand, when the size of the die is less than 2 mm or the discharge rate per hole exceeds 40 kg, the resin pressure in the die becomes high, which may result in the occurrence of vent-up or lack of stability of the strands, which is not preferable.

When a water tank is used for the cooling timing of the strands, it is preferable that the horizontal distance from when the strands exit the die to when they are first immersed in water is from 100 to 300 mm from the viewpoint of the stability of the strands. The water immersion distance of the strands is not particularly limited, and is preferably from 0.1 to 5 m. In particular, in the case of polyamide, in order to prevent thermal discoloration, the water immersion distance is preferably adjusted so that the pellet temperature immediately after cutting with the pelletizer is 140°C or lower, and preferably 120°C or lower. The water immersion distance is the distance from when the strands are immersed in water to when they are out of the water.

The thermoplastic resin pellet of the present invention can further contain additives such as pigments, plasticizers, viscosity-reducing agents, lubricants, mold release agents, dispersants, impact resistant materials, antistatic agents, heat resistant agents, antioxidants, weather resistant agents, antibacterial agents, and flame retardants as long as its properties are not significantly impaired.

When the pellet of the present invention contains a black pigment or a black dye as a pigment, the metallic coloring property, surface smoothness property, and metallic appearance are further improved, which is preferable. The black pigment is not particularly limited, and examples thereof include carbon black, acetylene black, lamp black, bone black, graphite, iron black, aniline black, cyanine black, and titanium black. Among them, carbon black is particularly preferable because the effects of the present invention can be easily exhibited. The black dye is not particularly limited, and examples thereof include an azine dye containing nigrosine and a polycyclic condensation dye containing anthraquinone. Among them, azine dyes are preferable because they are easy to handle, and for example, a commercially available product such as NYB27620B (made by Sanyo Kako Co., Ltd.), Orient Spirit Black SB (made by Orient Chemical Industries Co., Ltd.), Spirit Black No.850 (made by Sumitomo Chemical Co., Ltd.), or Nigrosine Base LK (made by BASF) can be used. The above-mentioned black pigment or black dye may be used alone or in combination. Among the azine dyes, nigrosine is particularly preferable. Examples of nigrosine include black azine-based condensed mixtures as described in COLOR INDEX as C.I. SOLVENT BLACK 5 and C.I. SOLVENT BLACK 7. The synthesis of such nigrosine can be performed, for example, by subjecting aniline, aniline hydrochloride, and nitrobenzene to oxidization and dehydrative condensation in the presence of iron chloride at a reaction temperature of 160 to 180°C. Further, purified nigrosine obtained by purifying the nigrosine thus obtained to have less than 0.1% of aniline or diphenylamine is more preferable. As such nigrosine, the NUBIAN BLACK series made by Orient Chemical Industries Co., Ltd. is commercially available.

The method for producing the thermoplastic resin pellet of the present invention will be described.

When the thermoplastic resin (A) and the metallic particles (B), and the filler (C) to be formulated as desired are melt-mixed, a known melt-kneading extruder can be used, but not limited thereto. Any of a single-screw and a multi-screw can be used, but a biaxial screw is preferably used in terms of suppressing crushing or breakage due to kneading of metallic particles as much as possible, resulting in further improvement of the metallic coloring property and surface smoothness property of the molded body. As a method of supplying the metallic particles (B) to the melt-kneading extruder, a mixture of the thermoplastic resin (A), the metallic particles (B) and the filler (C) is collectively charged from the upstream main hopper. In order to suppress the crushing or breakage of the metallic particles (B) as much as possible, the metallic particles (B) are preferably supplied by a side feeder from the middle of the extruder, and more preferably supplied downstream of the extruder as much as possible.

After melting and kneading, the kneaded product is usually extruded into a strand shape from a die, then cooled and pelletized to obtain pellets having a cylindrical shape of a predetermined size. Cooling is usually achieved by immersing the strands in a water tank. The shape of the cross section perpendicular to the longitudinal direction of the pellet usually reflects the opening shape of the die. As described above, the length (L) of the pellet can be adjusted by the speed of the take-up roller in the pelletizer for pelletizing and the rotation speed of the cutter blade. As described above, the major diameter (D) of the pellet can be adjusted by the hole size of the die, the take-up roller speed of the pelletizer, and the cooling timing of the strands.

### [Method for Producing Metallic-tone Molded Body]

Next, a method for producing a molded body using the thermoplastic resin pellets of the present invention will be described.

Examples of the molding method using the above-mentioned thermoplastic resin pellets include injection molding, blow molding, extrusion molding, inflation molding, and molding methods applied after sheet formation, such as vacuum molding, pneumatic molding, and vacuum pneumatic molding. Among them, the injection molding method is preferably used, and in addition to common injection molding methods, a gas injection molding method, an injection press molding method, and the like may also be adopted.

The temperature conditions in the case of the injection molding are the same as common temperature conditions of each thermoplastic resin. To take an example, the cylinder temperature is, for example, from 150 to 240°C for polypropylene, from 220 to 290°C for polyamide 6, from 260 to 300°C for polyamide 66, from 180 to 250°C for ABS resin, and from 260 to 350°C for polycarbonate. The mold temperature may be selected in the range of 40 to 150°C according to the properties of each thermoplastic resin. When the injection speed is high, the orientation of the metallic particles is disturbed, and the brightness, metallic coloring property, surface smoothness property, and flow mark suppressing property tend to decrease. However, in the present invention, even at a relatively high injection speed (e.g., 50 mm/sec), a molded body having very few flow marks and having metallic coloring property and surface smoothness property can be obtained.

In the present invention, from the viewpoint of further improving the metallic coloring property, surface smoothness property, flow mark suppressing property, and metallic appearance, the mold used in the injection molding preferably has a cavity surface polished to a surface roughness (Ra) of 0.1 µm or less. Here, the surface roughness is measured in accordance with JIS B0601 (2001). In order to control the surface roughness (Ra) of the cavity to 0.1 µm or less, the cavity surface is preferably finished by polishing with a file (polishing agent). Specifically, the cavity surface is finished by polishing with an ultrasonic polishing machine or by hand using a diamond file, a grindstone, a ceramic grindstone, a ruby grindstone, a GC grindstone, or the like as a file, thereby allowing the inner surface of the mold to be controlled to have a surface roughness of 0.1 µm or less. The polishing agent preferably has a polishing count of #1000 or more, more preferably #5000 or more, and even more preferably #8000 or more.

The steel material of the mold is preferably hardened and tempered steel having a hardness of 40 HRC or more, and more preferably a hardness of 50 HRC or more. Alternatively, a mold having a cavity surface chrome-plated may be used, instead of the mold having a cavity polished. A mold that has been polished as described above and then chrome-plated may be used.

Examples of molded products using the thermoplastic resin pellets of the present invention include various automobile parts, electric and electronic parts. Since the molded body of the present invention is excellent in metallic coloring property, surface smoothness property, flow mark suppressing property, and metallic appearance, it can be used as a replacement material for metal or conventional resin parts to enhance the design in automobile parts, particularly, in automobile interior parts, including various instruments such as a speedometer, a tachometer, a fuel gauge, a water temperature gauge, and a distance meter in an instrument panel; various switches and buttons around a car stereo, a navigation system, an air conditioner; grips of a shift lever and a side brake in the center console; door trims, armrests, door levers, and the like. As electric and electronic parts, it can be used in various parts and housings around personal computers, mobile phone parts and housings, and resin parts for electrical appliances such as other OA equipment parts. In addition, a more sufficient metallic appearance can be obtained, so that while weight reduction is achieved particularly with automobile parts such as grips of a shift lever and a side brake, door trims, armrests, door levers, and the like, the texture is maintained, and thus, a high quality feeling is further provided.

### EXAMPLES

Hereinafter, the present invention will be specifically described with reference to Examples, but the present invention is not limited to these Examples.

### 1. Raw Materials

### (1) Thermoplastic resin (A)

· A-1: Polyamide 6 "A1030BRL" made by Unitika Ltd., relative viscosity 2.5
· A-2: Polypropylene "J106" made by Prime Polymer Co., Ltd., MFR 15 g/10 minutes
· A-3: Polycarbonate "S-3000" made by Mitsubishi Engineering-Plastics Corporation, viscosity 0.475 dl/g

### · A-4: Production Example 1 Layered silicate-formulated polyamide 6

With respect to 100 parts by mass of ε-caprolactam (made by Ube Industries Ltd.), 0.4 parts by mass of phosphorous acid, 4 parts by mass of swelling layered silicate (C-1) to be described later, and 5 parts by mass of water were charged into an autoclave, the charged mixture was stirred at 80°C for 1 hour, thereafter stirred at 260°C under 0.7 Ma for 1 hour, and then stirred at 260°C under normal pressure for 1 hour to perform polymerization. The resulting resin was drawn out in a strand shape from the autoclave and then cut to obtain pellets. The obtained pellets were washed in water at 95°C for 12 hours to remove unreacted monomer components, and dried in a vacuum dryer at 100°C for 24 hours to obtain a layered silicate-formulated polyamide 6. This layered silicate-formulated polyamide 6 contains 4.2 parts by mass of layered silicate with respect to 100 parts by mass of a polyamide 6 component. The relative viscosity of polyamide 6 was 2.5.

### (2) Metallic particles (B)

· B-1: Aluminum paste, "Silveeds M100-BP" made by Asahi Kasei Chemicals Corporation, average particle size 10 µm
· B-2: Aluminum paste, "1950M" made by Toyo Aluminium K. K., average particle size 52 µm

When the metallic particles (B) are used in the paste form as described above, the content of the metallic particles (B) in the following Examples or Comparative Examples is a value converted into the content of the metallic particles (B) alone.

### (3) Plate-shaped, fibrous and/or granular filler (C)

· C-1: Swelling fluoromica, "ME-100" made by Co-op Chemical, Co., Ltd., average particle diameter 4.6 µm, cation exchange capacity 110 milliequivalent/100 g, plate shape
· C-2: Talc, "Talc K-1" made by Nippon Talc Co., Ltd., average particle diameter 8 µm, granular
· C-3: Wollastonite, "NYAD1250" made by Imerys, average particle size (average fiber diameter) 3 µm, average length 9 µm, fibrous

### 2. Evaluation Methods

### (1) Shape of Plate-type Test Piece and Mold

The plate-type test piece is a plate-shaped molded body having a length of 90 mm, a width of 50 mm, and a thickness of 2 mm. In the mold, one side gate (width 10 mm, thickness 2 mm) is placed as a gate at the center of the width direction, and the surface of the mold is polished with 8000 mesh and mirror-finished.

### (2) Preparation of Plate-type Test Piece

Thermoplastic resin pellets were prepared using an injection molding machine (SE-180EV made by Sumitomo Heavy Industries, Ltd., cylinder diameter 32 mm) under two conditions of injection speeds of 5 mm/s and 50 mm/s, for a cooling time of 30 seconds. The holding pressure changeover position was set to a position where 95% of the cavity capacity was filled with the primary pressure, and the holding pressure was set to 40 MPa. Cavity capacity refers to the capacity including the test piece part, and sprue and runner portions.

According to the type of resin used, the temperature conditions were set as follows:
A-1: Cylinder temperature 260°C, mold temperature 100°C
A-2: Cylinder temperature 200°C, mold temperature 60°C
A-3: Cylinder temperature 290°C, mold temperature 120°C
A-4: Cylinder temperature 260°C, mold temperature 100°C

### (3) Flow Mark Suppressing Property

Using a multi-angle spectrophotometer (BYK-maci 23 mm made by BKY-Gardner), light was incident on the plate-type test piece near the gate and on the center thereof at an angle of 45° with respect to the normal of the sample as shown in FIG. 1, and the regular reflection was determined as 0°. Then, L* at a light receiving angle of -15° was measured, and the difference between L* near the gate and L* on the center was calculated as ΔL*. When a flow mark is generated near the gate, ΔL* becomes large. Here, ΔL* was taken as an average value for 10 plate-type test pieces.
⊙: ΔL* was 0 or more and 0.2 or less (best);
∘: ΔL* was more than 0.2 and 0.5 or less (good);
△: ΔL* was more than 0.5 and 1 or less (no problem in practical use); and
×: ΔL* was more than 1 (problem in practical use).

### (4) Metallic Coloring Property

Using a multi-angle spectrophotometer (BYK-maci 23 mm made by BKY-Gardner), light was incident on the plate-type test piece near the gate and on the center thereof at an angle of 45° with respect to the normal of the sample as shown in FIG. 1, and the regular reflection was determined as 0°. Then, L* at light receiving angles of 15° (1, 15), 25° (L25), and 45° (L45) were measured, and a flip-flop value (FF) was calculated by the following formula. FF is an index for perceiving a metallic tone, and the larger the value, the better the metallic coloring property.
FF = 0.908 × L15 - 0.069 × L25 - 0.412 × L45
⊙: FF was 90 or more (best);
∘: FF was 74 or more and less than 90 (good);
△: FF was 70 or more and less than 74 (no problem in practical use); and
×: FF was less than 70 (problem in practical use).

### (5) Surface Smoothness Property (Surface Glossiness)

Based on JIS Z8741, using a gloss meter (Gloss meter VG7000 type made by Nippon Denshoku Industries Co., Ltd.), the surface glossinesses at any five points on the surface of the plate-type test piece that had been molded at an injection speed of 5 mm/s were measured at an incident angle of 20°. Of the surface glossinesses at the five points, the lowest surface glossiness S was used.
⊙: S was 95% or more (best);
∘: S was 88% or more and less than 95% (good);
△: S was 85% or more and less than 88% (no problem in practical use); and
x: S was less than 85% (problem in practical use).

### (6) Metallic Appearance

The appearance of the molded body was visually observed and then evaluated based on the degree of similarity to the appearance of metal (particularly, aluminum).
⊙: The appearance of the molded body was most similar to the appearance of metal (best);
∘: The appearance of the molded body was good similar to the appearance of metal (good);
△: The appearance of the molded body was similar to the appearance of the metal to the extent that there was no practical problem (no practical problem); and
×: The appearance of the molded body was not sufficiently similar to the appearance of the metal (problem in practical use).

The evaluation result of the metallic appearance was in agreement with the lowest evaluation result among those of the metallic coloring property, the surface smoothness property, and the flow mark suppressing property.

### (7) Thermal Deformation Temperature (Heat Resistance Property) of Injection Molded Body

Injection molding was performed with thermoplastic resin pellets using an injection molding machine (SE-180EV made by Sumitomo Heavy Industries, Ltd., barrel diameter 32 mm) under the same temperature conditions (that is, conditions including a holding pressure of 40 MPa, an injection speed of 50 mm/s, and a cooling time of 30 seconds) as when the plate-type test piece was prepared, and ISO multipurpose test pieces (A type) were then obtained. Using the obtained test pieces, a thermal deformation temperature T was measured under a load of 1.8 MPa in accordance with ISO75.
⊙: T was 130°C or higher (best);
∘: T was 60°C or higher and lower than 130°C (good);
△: T was 40°C or higher and lower than 60°C (no problem in practical use); and
×: T was less than 40°C (problem in practical use).

### (8) Bending Strength of Injection Molded Body (Mechanical Properties)

Using the ISO multipurpose test pieces (A type) in the previous section, a flexural modulus E was measured at an ambient temperature of 23°C in accordance with ISO178.
⊙: E was 4.0 GPa or more (best);
∘: E was 2.5 GPa or more and less than 4.0 GPa (good);
△: E was 2.0 GPa or more and less than 2.5 GPa (no problem in practical use); and
×: E was less than 2.0 GPa (problem in practical use).

### (9) Length and Diameter of Pellet

The length (height) and diameter of randomly selected 20 pellets (cylindrical shape) were measured using a micrometer (MDC-25MX) made by Mitutoyo Corporation, and an average value was calculated.

### (10) Overall Evaluation

The overall evaluation was performed based on the evaluation results of the metallic coloring property, surface smoothness property, flow mark suppressing property, metallic appearance, heat resistance property, and mechanical properties.
⊙: All the evaluation results were ⊙ or higher;
∘: Of all the evaluation results, the lowest evaluation result was ∘;
△: Of all the evaluation results, the lowest evaluation result was △;
×: Of all the evaluation results, the lowest evaluation result was ×.

### Example 1

As a thermoplastic resin, 100 parts by mass of polyamide 6 (A-1), 2.0 parts by mass of metallic particles (B-1), and 1.0 part by mass of metallic particles (B-2) were mixed in a lump, and the mixture was charged from a main hopper of a twin-screw extruder (TEM26SS made by Toshiba Machine Co., Ltd.) and then melt-kneaded. The kneaded product was extruded into a strand shape from a die, then cooled in a water tank, and pelletized to obtain a polyamide resin composition pellet having a cylindrical shape. For cooling in the water tank, the horizontal distance from the die to when the strands were immersed in water was 150 mm, and the water immersion distance was 2 m. Melt kneading was performed at a resin temperature of 260°C, a screw rotation of 200 rpm, and a discharge rate of 30 kg/h. The diameter of the die used was 3 mm and the number of holes was 2. Using the obtained pellets, test pieces were prepared according to the above conditions, and then various evaluations were performed. The results are shown in Table 1.

### Example 2 (Reference)

As a thermoplastic resin, 100 parts by mass of polypropylene (A-2), 2.0 parts by mass of metallic particles (B-1), and 1.0 part by mass of metallic particles (B-2) were mixed in a lump, and the mixture was charged from a main hopper of a twin-screw extruder (TEM26SS made by Toshiba Machine Co., Ltd.) and then melt-kneaded. The kneaded product was extruded into a strand shape from a die, then cooled in a water tank, and pelletized to obtain a polypropylene resin composition pellet having a cylindrical shape. For cooling in the water tank, the horizontal distance from the die to when the strands were immersed in water was 100 mm, and the water immersion distance was 2.5 m. Melt kneading was performed at a resin temperature of 200°C, a screw rotation of 200 rpm, and a discharge rate of 30 kg/h. The diameter of the die used was 3 mm and the number of holes was 2. Using the obtained pellets, test pieces were prepared according to the above conditions, and then various evaluations were performed. The results are shown in Table 1.

### Example 3 (Reference)

As a thermoplastic resin, 100 parts by mass of polycarbonate (A-3), 0.5 parts by mass of metallic particles (B-1), and 0.5 parts by mass of metallic particles (B-2) were mixed in a lump, and the mixture was charged from a main hopper of a twin-screw extruder (TEM26SS made by Toshiba Machine Co., Ltd.) and then melt-kneaded. The kneaded product was extruded into a strand shape from a die, then cooled in a water tank, and pelletized to obtain a polycarbonate resin composition pellet having a cylindrical shape. For cooling in the water tank, the horizontal distance from the die to when the strands were immersed in water was 200 mm, and the water immersion distance was 2 m. Melt kneading was performed at a resin temperature of 290°C, a screw rotation of 200 rpm, and a discharge rate of 25 kg/h. The diameter of the die used was 3 mm and the number of holes was 2. Using the obtained pellets, test pieces were prepared according to the above conditions, and then various evaluations were performed. The results are shown in Table 1.

### Examples 4, 7 to 12, Reference Example 13 and Comparative Examples 1 to 6

In the same manner as in Example 1 except that each component was formulated in the formulating amounts shown in Table 1, pellets were obtained and injection molding was further performed. Various evaluations were performed using the obtained test pieces. The results are shown in Table 1.

### Example 5 (Reference)

In the same manner as in Example 2 except that each component was formulated in the formulating amounts shown in Table 1, pellets were obtained and injection molding was further performed. Various evaluations were performed using the obtained test pieces. The results are shown in Table 1.

### Example 6 (Reference)

In the same manner as in Example 3 except that each component was formulated in the formulating amounts shown in Table 1, pellets were obtained and injection molding was further performed. Various evaluations were performed using the obtained test pieces. The results are shown in Table 1.

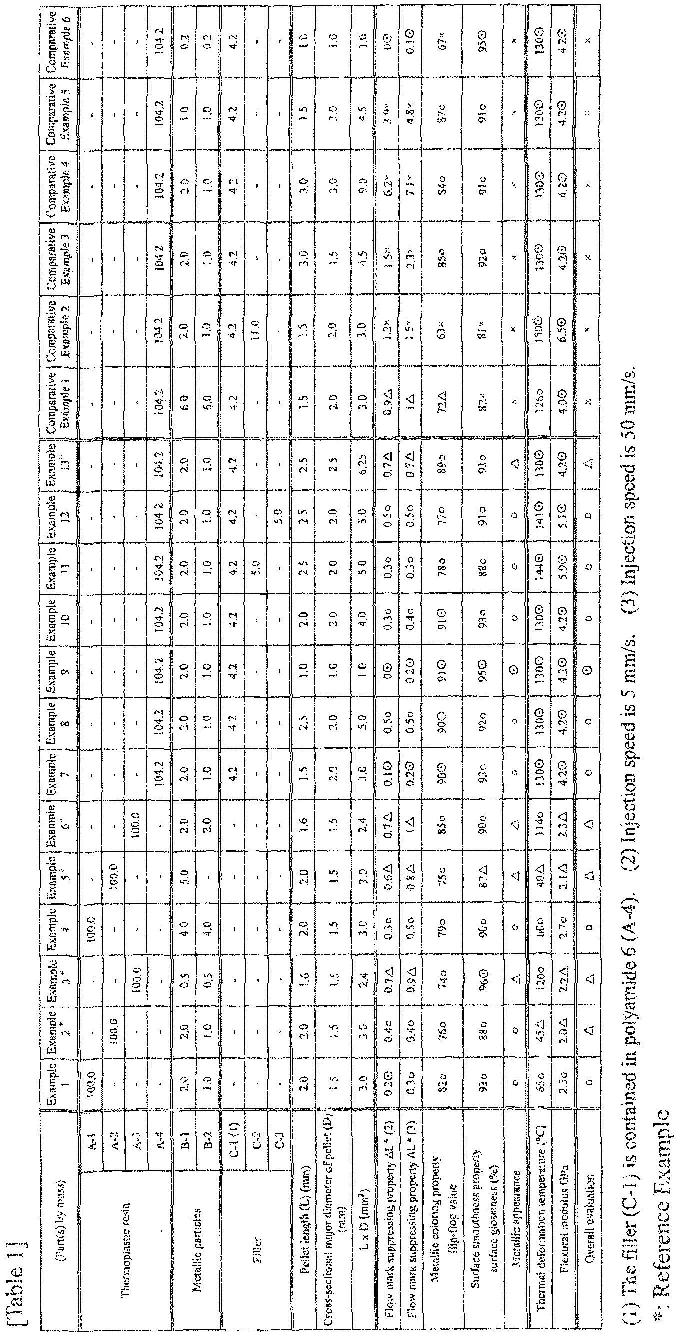

The molded body produced from the pellets obtained in Examples 1, 4 and 7 to 12 was excellent in metallic coloring property, surface smoothness property and flow mark suppressing property, and as a result, a sufficient metallic appearance was obtained. The molded body was also excellent in heat resistance property and mechanical properties. The metallic appearance of Example 9 was remarkably good.

Since the molded body produced from the pellets obtained in Comparative Example 1 had an excessively high content of metallic particles, the surface smoothness property decreased, and as a result, a sufficient metallic appearance could not be obtained.

Since the molded body produced from the pellets obtained in Comparative Example 2 had an excessively high content of filler, the metallic coloring property, surface smoothness property, and flow mark suppressing property decreased, and as a result, a sufficient metallic appearance could not be obtained.

Since in the molded body produced from the pellets obtained in Comparative Examples 3 to 5, the pellets did not have a predetermined size, the flow mark suppressing property decreased, and as a result, a sufficient metallic appearance could not be obtained.

Since the molded body produced from the pellets obtained in Comparative Example 6 had an excessively low content of metallic particles, the metallic coloring property decreased, and as a result, a sufficient metallic appearance could not be obtained.

### INDUSTRIAL APPLICABILITY

The metallic-tone thermoplastic resin pellet of the present invention can be suitably used for applications such as automobile interior parts and electric and electronic parts.

## Claims

1. A metallic-tone thermoplastic resin pellet comprising 100 parts by weight of a thermoplastic resin (A), 0.5 to 10 parts by mass of metallic particles (B), and 0 to 10 parts by mass of plate-like, fibrous and/or granular filler (C),
wherein
the thermoplastic resin (A) is polyamide,
the metallic particles (B) are aluminum particles,
the pellet has a cylindrical shape having a circular or elliptical cross section perpendicular to the longitudinal direction,
the pellet has a length of 0.5 to 2.8 mm and a cross-sectional major diameter of 0.5 to 2.8 mm, and
a product of the length (mm) and the cross-sectional major diameter (mm) of the pellet is from 0.5 to 5.5.

2. The metallic-tone thermoplastic resin pellet of claim 1, wherein a content of the metallic particles (B) is from 1 to 5 parts by mass.

3. The metallic-tone thermoplastic resin pellet of claim 1 or 2, wherein the filler (C) is at least one inorganic filler selected from the group consisting of swelling layered silicate, talc, kaolin, wollastonite, calcium carbonate, silica, and mica.

4. The metallic-tone thermoplastic resin pellet of any one of claims 1 to 3, wherein the filler (C) has an average particle size of 0.01 to 10 µm,
the average particle size of the filler (C) is the average value of the maximum diameter when it is granular, the average value of the fiber diameter when it is fibrous, and the average value of the maximum length on the maximum surface when it is plate-shaped, and
the average particle size of the filler (C) is a number average value for at least 100 or more particles observed by an electron microscope as set out in the specification.

5. The metallic-tone thermoplastic resin pellet of any one of claims 1 to 4, wherein a content of the filler (C) is from 2 to 10 parts by mass.

6. The metallic-tone thermoplastic resin pellet of any of claims 1 to 5, wherein
the thermoplastic resin (A) is polyamide,
the product of the length (mm) and the cross-sectional major diameter (mm) of the pellet is from 0.5 to 2, and
a content of the filler (C) is from 2 to 10 parts by mass.

7. A molded body obtained by injection molding or extrusion molding using the metallic-tone thermoplastic resin pellet of any one of claims 1 to 6.

## Patentansprüche

1. Ein thermoplastisches Harzgranulat mit metallischem Farbton, umfassend 100 Gewichtsteile eines thermoplastischen Harzes (A), 0,5 bis 10 Massenteile metallischer Partikel (B) und 0 bis 10 Massenteile eines plättchenförmigen, faserförmigen und/oder granulären Füllstoffes (C),
wobei
das thermoplastische Harz (A) Polyamid ist,
die metallischen Partikel (B) Aluminiumpartikel sind,
das Granulat eine zylindrische Form mit einem kreisförmigen oder elliptischen Querschnitt senkrecht zur Längsrichtung aufweist,
das Granulat eine Länge von 0,5 bis 2,8 mm und einen Querschnitts-Hauptdurchmesser von 0,5 bis 2,8 mm aufweist und
ein Produkt der Länge (mm) und des Querschnitts-Hauptdurchmessers (mm) des Granulats 0,5 bis 5,5 beträgt.

2. Das thermoplastische Harzgranulat mit metallischem Farbton nach Anspruch 1, wobei ein Gehalt der metallischen Partikel (B) 1 bis 5 Massenteile beträgt.

3. Das thermoplastische Harzgranulat mit metallischem Farbton nach Anspruch 1 oder 2, wobei der Füllstoff (C) mindestens ein anorganischer Füllstoff, ausgewählt aus der Gruppe bestehend aus quellendem Schichtsilicat, Talkum, Kaolin, Wollastonit, Calciumcarbonat, Kieselsäure und Glimmer, ist.

4. Das thermoplastische Harzgranulat mit metallischem Farbton nach einem der Ansprüche 1 bis 3, wobei der Füllstoff (C) eine mittlere Teilchengröße von 0,01 bis 10 µm aufweist,
die mittlere Teilchengröße des Füllstoffes (C) der Mittelwert des Maximaldurchmessers ist, wenn er granulär ist, der Mittelwert des Faserdurchmessers ist, wenn er faserförmig ist, und der Mittelwert der maximalen Länge auf der maximalen Oberfläche ist, wenn er plättchenförmig ist, und
die mittlere Teilchengröße des Füllstoffes (C) ein Zahlenmittelwert für mindestens 100 oder mehr Partikel, betrachtet mit Hilfe eines Elektronenmikroskops wie in der Beschreibung erläutert, ist.

5. Das thermoplastische Harzgranulat mit metallischem Farbton nach einem der Ansprüche 1 bis 4, wobei ein Gehalt des Füllstoffes (C) 2 bis 10 Massenteile beträgt.

6. Das thermoplastische Harzgranulat mit metallischem Farbton nach einem der Ansprüche 1 bis 5, wobei
das thermoplastische Harz (A) Polyamid ist,
das Produkt der Länge (mm) und des Querschnitts-Hauptdurchmessers (mm) des Granulats 0,5 bis 2 beträgt und
ein Gehalt des Füllstoffes (C) 2 bis 10 Massenteile beträgt.

7. Ein Formkörper, erhalten durch Spritzgießen oder Strangpressen unter Verwendung des thermoplastischen Harzgranulats mit metallischem Farbton nach einem der Ansprüche 1 bis 6.

## Revendications

1. Pastille de résine thermoplastique de nuance métallique comprenant 100 parties en poids d'une résine thermoplastique (A), 0,5 à 10 parties en masse de particules métalliques (B), et 0 à 10 parties en masse de charge en forme de plaquettes, fibreuse et/ou granulaire (C),
dans laquelle
la résine thermoplastique (A) est un polyamide,
les particules métalliques (B) sont des particules d'aluminium,
la pastille a une forme cylindrique ayant une section transversale circulaire ou elliptique perpendiculaire à la direction longitudinale,
la pastille a une longueur de 0,5 à 2,8 mm et un diamètre majeur en section transversale de 0,5 à 2,8 mm, et
le produit de la longueur (mm) et du diamètre majeur en section transversale (mm) de la pastille est de 0,5 à 5,5.

2. Pastille de résine thermoplastique de nuance métallique selon la revendication 1, dans laquelle la teneur en les particules métalliques (B) est de 1 à 5 parties en masse.

3. Pastille de résine thermoplastique de nuance métallique selon la revendication 1 ou 2, dans laquelle la charge (C) est au moins une charge inorganique choisie dans le groupe constitué par un silicate lamellaire gonflant, le talc, le kaolin, la wollastonite, le carbonate de calcium, la silice, et le mica.

4. Pastille de résine thermoplastique de nuance métallique selon l'une quelconque des revendications 1 à 3, dans laquelle la charge (C) a une granulométrie de 0,01 à 10 m,
la granulométrie moyenne de la charge (C) est la valeur moyenne du diamètre maximal quand elle est granulaire, la valeur moyenne du diamètre des fibres quand elle est fibreuse, et la valeur moyenne de la longueur maximale sur la surface maximale quand elle est en forme de plaquettes, et
la granulométrie moyenne de la charge (C) est la valeur moyenne en nombre pour au moins 100 particules ou plus observées au microscope électronique comme indiqué dans la description.

5. Pastille de résine thermoplastique de nuance métallique selon l'une quelconque des revendications 1 à 4, dans laquelle la teneur en la charge (C) est de 2 à 10 parties en masse.

6. Pastille de résine thermoplastique de nuance métallique selon l'une quelconque des revendications 1 à 5, dans laquelle
la résine thermoplastique (A) est un polyamide,
le produit de la longueur (mm) et du diamètre majeur en section transversale (mm) de la pastille est de 0,5 à 2, et
la teneur en la charge (C) est de 2 à 10 parties en masse.

7. Corps moulé obtenu par moulage par injection ou moulage par extrusion utilisant la pastille de résine thermoplastique de nuance métallique selon l'une quelconque des revendications 1 à 6.
